# EUROPEAN PATENT APPLICATION

(11) **EP 4 040 842 A1**
(43) Date of publication of application: **10.08.2022**
(21) Application number: 21155213.8
(22) Date of filing: 04.02.2021
(51) Int. Cl.: H04W 24/10, H04W 36/14, H04W 48/18, H04W 48/20, H04W 76/27

(54) **DETECTION AND REPORTING OF SLICE MISALIGNMENTS**

(71) Applicant: Wollochet Solutions LLC, Wilmington, DE 19801 (US)
(72) Inventor: SCHMIDT, Andreas, 38124 Braunschweig (DE); LUFT, Achim, 38118 Braunschweig (DE); BIENAS, Maik, 38170 Schöppenstedt (DE); HANS, Martin, 3162 Bad Salzdetfurth (DE)
(74) Representative: Lang, Johannes

(57) **Abstract**

The invention provides a method for enabling a user equipment, UE, device to obtain information for assisting cell selection in a mobile communication network in which the mobile communication network is sub-divided into virtual networks termed network slices, each slice being having an identifier unique within the mobile communications network, the identifier comprising an expected network behaviour indicator and a slice differentiator, the method comprising enabling the UE device to collect slice specific information when the UE device is in a radio resource control idle or inactive state.

## Description

The present invention relates to enabling a communication device such as a mobile phone, termed user equipment, to access a public land mobile network (PLMN) which is divided into virtual networks termed network slices.

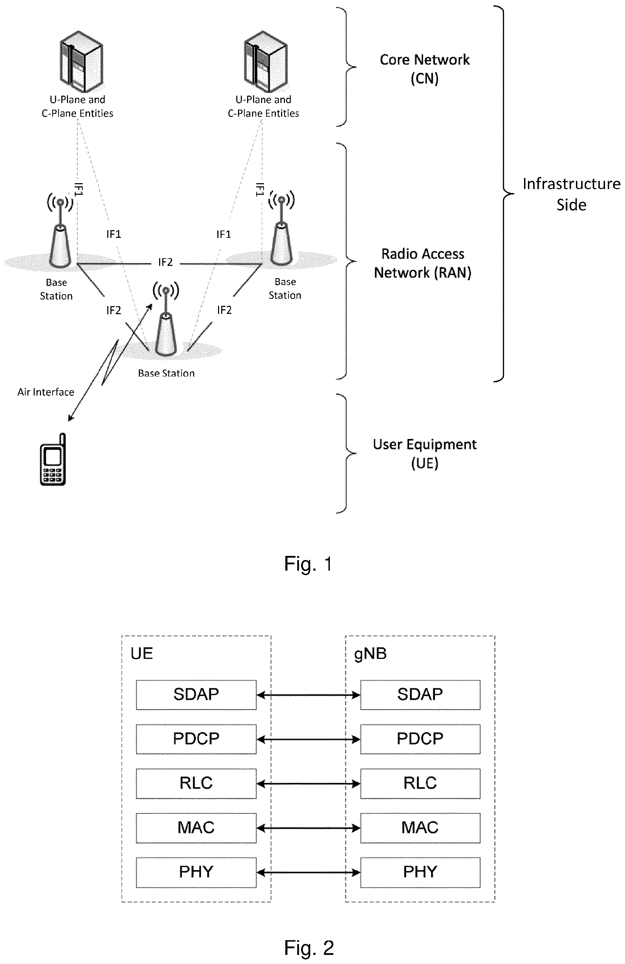

A typical cellular communication system operated by a mobile network operator (MNO) according to 3GPP is shown schematically in Fig. 1. Details of functional entities shown in Fig. 1 are described in 3GPP TS 36.300 (for 4G-LTE) and 3GPP TS 38.300 (for 5G-NR).

For example, in case of 5G-NR, a radio access network (RAN) consists of base stations called gNBs, providing user plane (SDAP/PDCP/RLC/MAC/PHY) and control plane (RRC) protocol terminations towards mobile communication devices (UEs).

The gNBs are connected by means of an NG interface ("IF1" in Fig. 1) to a core network (CN), more specifically to an access and mobility management function (AMF), taking care of control-plane or C-Plane traffic, by means of an NG-C interface and to a user plane function (UPF), taking care of user-plane or U-Plane traffic, by means of an NG-U interface. The NG interface supports a many-to-many relation between AMFs/UPFs and gNBs.

The gNBs are also interconnected with each other by means of an Xn interface (in Fig. 1 this is called "IF2"). The Xn interface connects the various base stations logically with each other. In some deployments, an Xn connection may physically be routed through the CN.

Each base station of the cellular communication system may control communication over the air interface within its geographic coverage area, namely in its radio cell(s). When a mobile communication device (also referred to as UE, user equipment) is located in coverage of a radio cell and camping on it (in other words, when it is registered with the radio cell providing coverage) it may communicate with the base station controlling that radio cell. When a call is initiated by the user of the mobile communication device (mobile originated traffic) or a call is addressed to the mobile communication device (mobile terminated traffic), radio channels may be set up between the mobile communication device and the base station controlling the radio cell in which the mobile communication device is located. In the former case (mobile originated traffic) the mobile communication device will initiate a random access procedure (RAP), in the latter case of mobile terminated traffic, the infrastructure side will initiate paging towards the mobile communication device. The air interface between a UE and its serving base station is also referred to as the access link. The entirety of all access links provided by a base station defines the base station's service area.

As the mobile communication device moves throughout the coverage area of the cellular communication system, control of the call may be transferred between neighbouring radio cells. The transfer of calls from one radio cell to another radio cell is usually referred to as handover (or handoff). Handover is usually based on measurements (e.g., measurements of the downlink signal strength on the serving cell and/or at least one different overlapping and/or neighbouring radio cell) performed by the UE as configured by the network.

In this context, the term "call" is intended to cover a wide variety of use cases where user data is being exchanged unidirectionally or bidirectionally over the air interface (access link) as part of an active connection (i.e. when the UE is in RRC_CONNECTED state of operation) between a serving base station and a mobile communication device. It can for example be a voice call, a data call, internet data traffic but other types of connection are possible.

An IF1 connection (with or without a piggy-backed IF2 connection) is often realized as a wired connection (e.g., using fibre optics between the core network and the base station site). Wired connections are quite expensive for the MNO and inflexible. However, depending on the scenario, deployments exist where such IF1 and/or IF2 connections are realized as wireless, highly directive line-of-sight connections (e.g., between two base station towers where line-of-sight is prevalent) using an antenna system (e.g., a dish antenna) that is distinct from the antennas serving the UEs.

The 5G-NR air interface is logically divided into horizontal protocol layers. It is also vertically split into "user plane" and "control plane". The bottom most layer is the "physical layer" or "PHY" (L1) according to the OS1 (open system interconnection) reference model.

On top of the physical Layer, there is the "data link layer" (L2) according to the OSI reference model. In 5G-NR the "data link layer" consists of the following sublayers:
service data adaptation protocol (SDAP) sublayer,
packet data convergence protocol (PDCP) sublayer,
radio link control (RLC) sublayer, and
medium access control (MAC) sublayer.

All these sublayers terminate in the base station (gNB) on infrastructure side. The SDAP sublayer is only relevant for u-plane traffic, as shown in Fig. 2.

On top of the data link layer, there is the "network layer" (L3) according to the OSI reference model. In 5G-NR the network layer consists of the following sublayers:
NAS (non-access stratum) control protocol sublayer,
radio resource control (RRC) protocol sublayer,

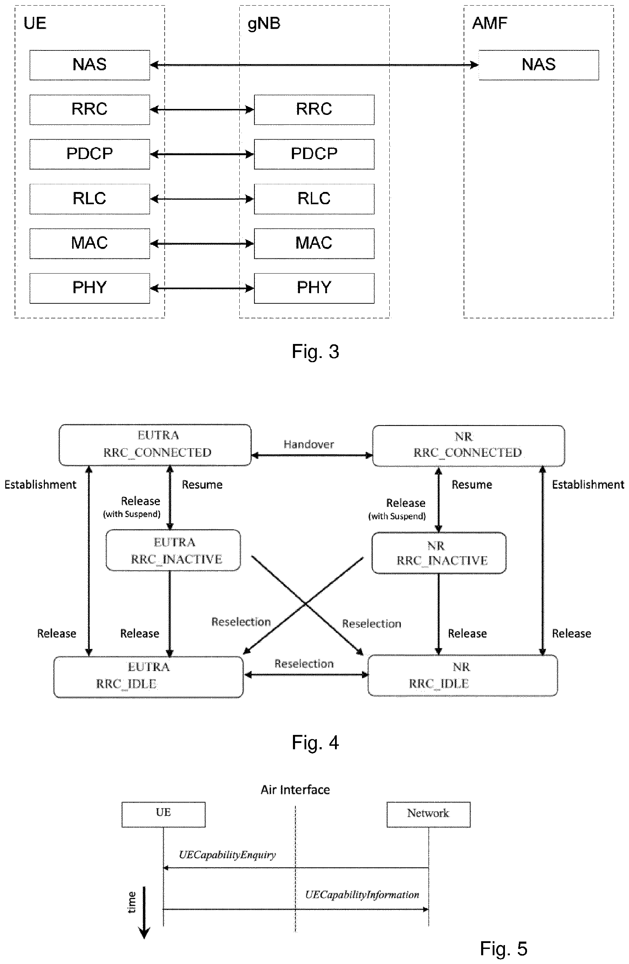

While the RRC sublayer terminates in the base station (gNB) on infrastructure side, the NAS layer terminates in the AMF, i.e. in the core network. Both NAS and RRC are only relevant for c-plane traffic, as shown in Fig. 3.

Each protocol layer provides the protocol layer above it with its services via defined service access points (SAPs). To provide a better understanding of the protocol layer architecture, the SAPs were assigned unambiguous names: The PHY provides its services to the MAC layer via transport channels, the MAC layer provides its services to the RLC layer via logical channels, and the RLC layer provides its services to the PDCP layer as data transfer as function of the RLC mode, i.e. TM (transparent mode), UM (unacknowledged mode) and AM (acknowledged mode). Further, the PDCP layer provides its services to the RRC layer and the SDAP layer via radio bearers, specifically via signalling radio bearers (SRB) to the RRC and via data radio bearers (DRB) to the SDAP. According to 5G-NR a maximum of 4 SRBs and 15 DRBs are currently supported. Finally, the SDAP layer offers 5GC quality of service (QoS) flows to u-plane upper layers.

In order to allow UEs to perform downlink measurements a number of downlink reference signals may be interspersed into the radio resource grid at PHY level. Signals interspersed at the physical layer differ from physical downlink channels in that they do not carry any data coming from higher layers of the protocol stack (i.e. transport channels).

As indicated above already, the radio protocol architecture is not just split horizontally into the above-described protocol layers; it is also split vertically into the control plane (C-plane) and the user plane (U- plane). The entities of the control plane are used to handle the exchange of signalling data between the mobile terminal and the base station, which are required among other for the establishment, reconfiguration and release of physical channels, transport channels, logical channels, signalling radio bearers and data radio bearers, whereas the entities of the user plane are used to handle the exchange of user data between the mobile communication device and the base station.

An overview of the functions performed by the various sublayers of the 5G-NR protocol stack can for instance be found in 3GPP TS 38.300.

Fig. 4 shows a radio resource control (RRC) protocol state diagram according to 3GPP TS 38.331. It also illustrates the inter-RAT mobility support between 4G-LTE (EUTRA states, depicted on the left) and 5G-NR (NR states, depicted on the right).

In RRC_CONNECTED an RRC connection has been established for the transfer of data to/from the UE and mobility of a UE is network controlled and UE assisted. That means based on measurements collected by and received from the UE the infrastructure side may trigger handover from one base station to another.

In RRC_IDLE mobility is solely under control of the UE. That means based on measurements collected by the UE, the UE itself continuously checks whether there are radio cells around that are better suited for the UE to camp on (although certain limitations can be configured by the infrastructure side). A UE in RRC_IDLE is required to inform the infrastructure from time to time about changes of its tracking area (in order to guarantee reachability in case of paging).

In order to reduce network signalling load as well as latency involved in the state transition from RRC_IDLE to RRC_CONNECTED, the RRC_INACTIVE state was introduced. A UE in RRC_INACTIVE state is allowed to behave in similar ways as a UE in RRC_IDLE state. In RRC_INACTIVE the UE remains in CM-CONNECTED and can freely move within an area configured by the RAN, the so-called RAN-based notification area (RNA), without notifying any infrastructure entity about its movement. The RNA is similar to the tracking area (TA) concept that was defined for UEs residing in RRC_IDLE mode of operation. In contrast to the tracking area concept, where TAs are administered by the AMF in the mobile communication system's CN, RNAs are administered only by certain RAN nodes. Consequently, in RRC_INACTIVE, the last serving base station keeps the UE context and the UE-associated connection into the core network (i.e. the interface "IF1" termination point, cf. Fig. 1). If the last serving base station receives downlink data from the respective core network entity (UPF, in case of 5G-NR) or downlink UE-associated signalling (AMF, in case of 5G-NR), it pages in the cells corresponding to the RNA and may also forward paging (via interface "IF2" of Fig. 1) to neighbouring base stations, if the RNA includes cells of those base stations.

Further details about the UE states in 5G-NR and state transitions (including inter-RAT aspects) can be found in section 4.2 of 3GPP TS 38.331.

According to 3GPP TS 38.304, a 5G-NR mobile communication device residing in RRC_IDLE state or RRC_INACTIVE mode of operation is expected to perform the following tasks:
PLMN selection;
cell selection and reselection;
location registration and RNA update.

PLMN selection, cell reselection procedures, and location registration are common for both RRC_IDLE state and RRC_INACTIVE state. RNA update is only applicable for RRC_INACTIVE state. When a UE selects a new PLMN, the UE automatically transitions from RRC_INACTlVE to RRC_IDLE.

When a UE is switched on it is first in RRC_IDLE state. In this situation, the non-access stratum (NAS) entity in the UE typically provides a list of equivalent PLMNs that the access stratum (AS) shall use for cell selection. That means the UE is first expected to scan all RF channels in the NR bands according to its capabilities to find available PLMNs. On each detected carrier, the UE shall search for the strongest cell and read its system information, in order to find out which PLMN(s) the cell belongs to. The strongest radio cell is determined by the UE based on measurements of the quality of received downlink signals.

In a cellular communication system operating according to 5G-NR, information about the at least one PLMN in a cell can be derived from the synchronization signal block (SSB), which may for example comprise three types of physical layer signals (these may be: primary synchronization signal, secondary synchronization signal and demodulation reference signal) and one physical downlink channel, namely the physical broadcast channel (PBCH), where the initial part of the system information (the so-called master information block, MIB) can be found. To be more specific, the MIB broadcast on PBCH, contains information required for initial access and information for acquiring further parts of the system information. For instance, a list of PLMN identifiers may be part of "SIB-Type 1" transmitted on the physical downlink shared channel (PDSCH), which can only be read after the UE has successfully received and decoded the MIB.

If the UE can read one or several PLMN identities in the strongest radio cell, each PLMN which is found shall be reported to the NAS as a high quality PLMN (but without the RSRP value), provided that the following high-quality criterion is fulfilled: For a 5G-NR cell, the measured reference signal received power (RSRP) value shall be greater than or equal to -110 dBm.

In detail, SS-RSRP is defined (cf. 3GPP TS 38.215) as the linear average over the power contributions (in watt) of the resource elements that carry the secondary synchronization signals (SSS). The measurement time resource(s) for SS-RSRP are confined within an SSB measurement time configuration (SMTC) window duration. For SS-RSRP determination, demodulation reference signals for PBCH and, if indicated by higher layers, CSI RS in addition to SSS may be used. SS-RSRP using a demodulation reference signal for PBCH or a CSI reference signal shall be measured by linear averaging over the power contributions of the resource elements that carry corresponding reference signals taking into account power scaling for the reference signals.

PLMNs which are found but do not satisfy the high-quality criterion but for which the UE has been able to read the PLMN identities are also reported to the NAS. This is done together with their corresponding RSRP values. The quality measure reported by the UE to NAS shall be the same for each PLMN found in one cell. The search for PLMNs may be stopped on request from the NAS. The UE may optimise the PLMN search by using stored information, such as frequencies and (optionally) also information on cell parameters from previously received measurement control information elements.

During cell selection the UE searches for a suitable cell of the selected PLMN. This basically means the UE is looking for a cell to camp on. Once the UE has chosen a suitable cell to provide available services, it monitors its control channel. This behaviour is defined as "camping on the cell". If necessary, the UE may then register its presence, by means of a NAS registration procedure, in the tracking area of the chosen cell. As an outcome of a successful location registration, the selected PLMN then becomes the "registered PLMN" (cf. 3GPP TS 23.122 for more details).

If the UE finds a more suitable cell, according to the cell reselection criteria, it may choose that cell for camping (by performing cell reselection). If the new cell does not belong to at least one tracking area to which the UE is registered, location registration needs to be performed again. In RRC_INACTIVE state, if the new cell does not belong to the configured RNA, an RNA update procedure is performed.

If configured, the UE shall search for higher priority PLMNs at regular time intervals as described in 3GPP TS 23.122 and search for a suitable cell if another PLMN has been selected by NAS. If the UE loses coverage of the registered PLMN, either a new PLMN is selected automatically (automatic mode), or an indication of available PLMNs is given to the user so that a manual selection can be performed (manual mode).

The purpose of camping on a cell in RRC_IDLE state and RRC_INACTIVE state is fourfold:
a) It enables the UE to receive system information from the PLMN.
b) When registered and if the UE wishes to establish an RRC connection or resume a suspended RRC connection, it can do this by initially accessing the network on the control channel of the cell on which it is camped.
c) If the network needs to send a message or deliver data to the registered UE, it knows (in most cases) the set of tracking areas (in RRC_IDLE state) or RNA (in RRC_INACTIVE state) in which the UE is camped. It can then send a "paging" message for the UE on the control channels of all the cells in the corresponding set of areas. The UE will then receive the paging message and can respond.
d) It enables the UE to receive ETWS and CMAS notifications.

More information about UE behaviour related procedures in RRC_IDLE and RRC_INACTlVE states can be found in 3GPP TS 38.304.

Once the UE has chosen a cell to camp on, it can be configured by the network with paging discontinuous reception (paging DRX). In this case, a UE residing in RRC_IDLE or RRC_INACTIVE is only required to monitor paging channels during one paging occasion (PO) per DRX cycle (cf. 3GPP TS 38.304). Thus, the UE can wake up during the paging occasion and listen to the paging message to check and see if it is being paged. Ideally, the paging occasion is kept very short; it's usually only a few milliseconds long and it does not require the UE to be connected to the network. Consequently, a UE configured with paging DRX alternates between being completely unavailable to the network and being available for short durations (i.e. only during certain paging occasions).

Minimization of drive tests (MDT) is a feature first introduced in 3GPP Rel-10 that enables operators to utilize users' equipment to collect radio measurements and associated location information, in order to assess network performance while reducing the operational expenditure associated with traditional drive tests. The focus of MDT in Rel-10 was coverage optimization in 3G-UMTS and 4G-LTE networks. However, in the increasingly complex wireless packet data networks of today, performance is affected by many different factors and cannot easily be estimated by simple radio measurements. Therefore, in 3GPP Rel-11, MDT was enhanced in order to provide a more complete view of network performance by adding quality of service (QoS) verification to the scope of MDT.

3GPP TS 37.320 defines two flavours of MDT: immediate-MDT and logged-MDT. For this invention, only the latter one is of relevance, where the UE is configured while residing in RRC_CONNECTED for measurement collection during RRC_IDLE or RRC_INACTIVE and reporting at a later point in time (after it has returned back to RRC_CONNECTED mode of operation again). The minimum requirement regarding the memory size for the storage of MDT log-files in UEs is 64kB. An MDT log-file may contain a list of measurements (such as RSRP/RSRQ values of the cell the UE is camping on as well as some measurements collected on inter-frequency and inter-RAT neighbour cells) plus corresponding time and location stamps.

There was no support of MDT for 5G-NR in Rel-15, which was 3GPP's first 5G-NR release, but in Rel-16 the following 5G-NR specific enhancements for MDT were introduced: beam level measurements, WLAN/Bluetooth (r) RSSI measurements, WLAN RTT measurements, beam recovery failure triggering RLF-report, reporting of sub carrier spacing for varying numerologies, and random access reporting.

Due to the similarities between RRC_IDLE and RRC_INACTIVE, logged-MDT can also be configured for UEs residing in the RRC_INACTIVE mode of operation.

In recent years there was a strong demand of wireless communication in vertical markets, as connectivity and mobility empower the transformation and innovation in industries such as manufacturing, transportation, civil services, the energy sector, healthcare, and many more. These diverse vertical services bring about a wide range of performance requirements in throughput, capacity, latency, mobility, reliability, position accuracy, etc. It is 3GPP's ambition to provide a common platform to meet all the challenges of current and future use cases and services, not only for those envisioned today, but also for those that one cannot yet imagine. During work on Rel-15 (3GPP's first release of 5G-NR) network slicing was therefore specified. In this endeavour, the focus was put on core network (CN) architecture advancements towards more flexibility and higher scalability for a multitude of services of disparate requirements, thereby laying the foundation of a common connectivity platform. In Rel-15, a slice is rather transparent for the Radio Access Network (RAN) of the communication system.

Evolving the CN-centric network slicing concept of Rel-15 to embrace the RAN is a logical progression. In August 2020, RAN Working Group #2 started to work on a new Rel-17 study item for "RAN Support of Network Slicing". The corresponding study item description can be found in RP-193254 and the findings of this work package will be summarized in 3GPP TR 38.832, expected by summer 2021.

The basic idea with this study item is to bring more flexibility and higher scalability for a multitude of services for the so-called "vertical industries" with their disparate requirements also to the RAN. In future, a network slice will span both the CN and the RAN, and many experts consider this type of end-to-end network slicing will help to unleash the full business potential of 5G-NR.

In general, network slicing allows logical networks to be created on top of a common shared physical infrastructure. This results in the ability to tailor customer service offerings according to varying needs, reduced risks and increased flexibility and agility through shorter time-to-market and improved total cost of ownership.

Currently, discussions are ongoing in 3GPP about configuration details of entities involved for efficient RAN slicing. For example, the UE is supposed to be configured by the infrastructure side with a list of slices it can use (so-called "configured slices"). For example, the base stations are supposed to be configured by the CN with a list of slices they support (so-called "allowed slices") and may therefore use for service advertisement. In this context, a given slice is referred to by means of a slice-ID, that may be part of or represented by a single network slice selection assistance information (S-NSSAI). Multiple S-NSSAls can be grouped in a NSSAI container.

Furthermore, a list of "configured slices" is sometimes referred to as a list of "intended slices", as it may comprise instances of slices that a UE, or an application installed on the UE, intends to use for communication at some point in time. In this specification the terms "configured slices" and "intended slices" are therefore used interchangeably. Consequently, there may be deployment scenarios in which only a subset of slices from the list of "configured slices" can be configured by the infrastructure side.

According to 3GPP TS 23.501 each slice is uniquely identified by an S-NSSAI, wherein a S-NSSAI is a combination of:
A mandatory SST (slice/service type) field, which identifies the slice type and consists of 8 bits (with range is 0-255);
An optional SD (slice differentiator) field, which differentiates slices with the same SST field and consists of 24 bits.

Furthermore, the NSSAI is defined as a list with up to eight S-NSSAI(s).

Slices can, for example, be allocated to
emergency services;
gaming with low latencies;
news and broadcast applications;
various internet of things (loT) applications; etc.

It is expected that changes to the "configured slices" information provided to a UE, as well as changes to the "allowed slices" information provided to a base station do not occur frequently. However, updates may happen, so one cannot assume that assignment of NSSAI information will never change over time.

3GPP TS 38.306 lists various UE radio access capability parameters for functions for which there is a possibility for UEs to signal different values. 3GPP TS 38.331 defines the encoding of the above-mentioned information elements and describes the messages to be exchanged at RRC protocol layer in context of the UE capability transfer procedure (cf. Fig. 5).

The network may initiate this procedure to a UE in RRC_CONNECTED when it needs a particular UE's (initial or additional) capability information. The base station is required to respect the signalled capability parameters when configuring the UE and when scheduling the UE. If the UE has changed its radio access capabilities, the UE shall request higher layers to initiate the necessary NAS procedures that would result in the update of UE radio access capabilities using a completely new RRC connection.

The currently envisaged concept with "configured slices" stored in the UE and "allowed slices" stored on infrastructure side implies certain drawbacks.

Firstly, base station configurations with respect to the list of "allowed slices" may change over time, so a UE in RRC_IDLE or RRC_INACTIVE state may find itself camping on a cell that is no longer supporting what the UE is supposed to use (according to its individual list of "configured slices"). This may result in connection set-up or connection resume attempts being unsuccessful and/or cell (re)selection triggers for the UE, as soon as the UE finds out, and/or cell redirection to another cell.

Secondly, it may also happen that a certain slice requested by a UE cannot be offered by a base station due to a momentary overload situation on infrastructure side. So, a UE's connection set-up or connection resume attempt in a cell may be rejected by the base station, although the requested slice selected from the UE's list of "configured slices" concurs perfectly with what the base station has been offering according to its list of "allowed slices" in said cell. In this case too, the connection set-up or connection resume attempt may be unsuccessful and/or the UE may initiate the cell (re)selection procedure and/or the UE is redirected to another cell.

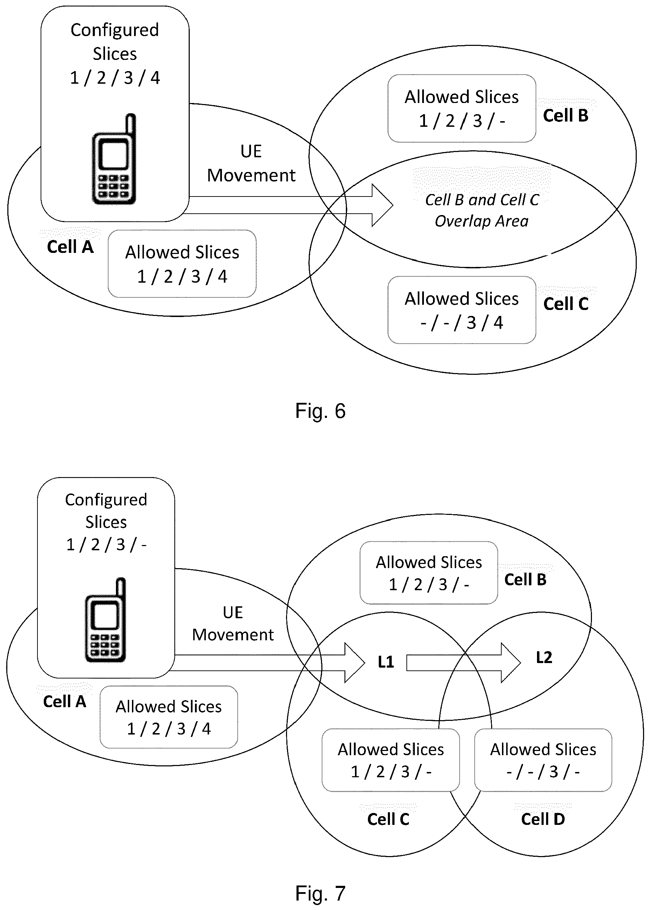

Thirdly, the cell chosen for camping was knowingly selected by the UE based on a sub-set of slices that the UE is supposed to use at a later point in time, for instance when two more or less equally suitable cells are available on the UE's trajectory, as depicted in Fig. 6.

In this example scenario, the UE in RRC_IDLE or RRC_INACTIVE has been configured with a set of "configured slices" comprising four entries (namely, slices 1 through 4). However, as the UE moves away from cell A, it is required to look out for new (better suited) cells to camp on in the area it is approaching (as the signal strength of cell A deteriorates and the signals of neighbouring cells B and C are getting stronger). According to prior art the UE is now required to pick the strongest cell following the cell (re)selection criteria described above based on downlink signal strength measurements. If additionally, slice considerations are taken into account, the UE may try to accommodate as much slices as possible from its list of "configured slices" (if both cell B and cell C appear to be more or less equally strong).

In the deployment example of Fig. 6, the UE would opt for Cell B advertising support of the slices 1, 2 and 3 over selection of Cell C which is only indicating support of slices 3 and 4. So, the UE's aim here was to cover the majority of "configured slices" thereby knowingly omitting Slice 4. Unfortunately, it may well be that the service type triggering the connection set-up procedure or the connection resume procedure at a later point in time is slice 4 that was left out intentionally. Similar to the two cases above, the UE's connection set-up or resume attempt may be unsuccessful (because slice 4 is not supported in cell B) and/or the UE may again have to initiate the cell (re)selection procedure and/or the UE is redirected to another cell.

This example shows that opting for the maximum number of supported slices does not always offer the best system performance.

Fourthly, there may be deployment scenarios in which the same list of "allowed slices" is supported by more than one cell in the same region and the UE's cell (re)selection decisions are solely based on downlink signal strength measurements, as depicted in the example scenario of Fig. 7.

At the same time, said cells may be deployed on different frequency layers and/or with different areal expansions (e.g., the UE is able to detect a small cell frequency layer serving one or more traffic hot spots and a macro cell frequency layer serving a larger coverage area). This type of cell deployment is usually referred to as a heterogeneous network (Het Net). Typical for 5G-NR deployments are also radio cells that are configured with a high degree of directivity (e.g., using beam forming techniques, for instance in higher frequency bands, such as NR-5G frequency range 2, known as FR2).

In the example scenario of Fig. 7 a macro cell coverage is provided by cell B while the cells C and D offer a comparatively smaller coverage area (these are for instance deployed to serve traffic hotspots). Furthermore, cell C appears to be better suited for camping as far as downlink signal strength measurements are concerned, so according to state of the art the UE on its way would (re)select to cell C. It is assumed that considering the number of supported slices ("allowed cells" advertised by the cells in question) would make no difference at this point in time for the UE in making the decisions on what cell to camp on (when moving towards location L1, the question to answer would be: (re)select to cell B or to cell C?).

As long as the UE stays in coverage of cell C (at location L1), everything is fine, but as soon as the UE moves on to location L2, the UE needs to enter the cell (re)selection procedure again - this time making a decision whether to camp on cell B or cell D. This may imply a TA or RNA update with additional signalling between the UE and the base station. Every TA or RNA update comes along with consumption of a non-negligible amount of radio resources on the air interface and processing resources on infrastructure side.

Other UEs moving on similar tracks (i.e. having trajectories either in the same direction or in counter direction) would benefit from the knowledge of allowed slices and cell dimensions in this area, so they can avoid going through a process of multiple cell (re)selection procedures.

This example shows that opting for the strongest cell does not always offer the best system performance.

For example, if the UE had taken into account areal expansions of slices (i.e. number and/or type of slices advertised by macro cell B versus small cell C) during the first cell (re)selection procedure at location L1, it could have selected cell B right away and saved resources.

The examples described above show that UEs residing in RRC_IDLE state or RRC_INACTIVE state would benefit from slice awareness in their environment for making reasonable cell (re)selection decisions. Furthermore, the examples described above show that the infrastructure side would benefit from more detailed knowledge about the behaviour of UEs operating in RRC_IDLE and/or RRC_INACTIVE mode with respect to slice usages. With this knowledge, UEs (and these include UEs other than the ones sending the inventive slice misalignment reports) can be provided with more sophisticated lists of "configured slices" and/or base stations can be provided with more elaborated lists of "allowed slices". Eventually, the overall system performance can be improved, when information about slice configurations and potential misalignments between slices (in particular, misalignments between "configured slices" maintained in a UE and "allowed slices" broadcast by a cell) are detected by UEs and reported to the infrastructure.

The present invention provides a method for enabling a user equipment, UE, device to obtain information for assisting cell selection in a mobile communication network in which the mobile communication network is sub-divided into virtual networks termed network slices, each slice being having an identifier unique within the mobile communications network, the identifier comprising an expected network behaviour indicator and a slice differentiator, the method comprising enabling the UE device to collect slice specific information when the UE device is in a radio resource control idle or inactive state.

In a further aspect, the invention provides a method for a mobile communication network to configure a user equipment, UE, device to collect data, wherein the mobile communication network is sub-divided into virtual networks termed network slices, each slice having an identifier unique within the mobile communications network, the identifier comprising an expected network behaviour indicator and a slice differentiator, the method comprising transmitting to the UE device an instruction to collect slice specific information when the UE device is in a radio resource control idle or inactive state.

The invention provides in one aspect a method of enabling a mobile communication device, for example a UE residing in RRC_IDLE or RRC_INACTIVE mode of operation, to collect slice specific pieces of information. Said slice specific data is written in a log file and reported to the infrastructure at a later point in time (after the UE has transitioned back to RRC_CONNECTED mode of operation). Preferably, the method is implemented as part of the MDT functionality.

In this aspect of the invention, the infrastructure side uses the reported slice configuration details (ideally together with other pieces of information, such as reported downlink signal strength measurements, reported location stamps, knowledge about the spatial coverage characteristics of the radio environment, and so on) to improve the overall system performance by adjusting the lists of "configured slices" (for the UEs) and/or the lists of "allowed slices" (for the base stations) and/or cell (re)selection parameters (such as, threshold for cell (re)selection, and so on) in general.

Preferred characteristics of our method are as follows.

According to a first aspect of the present invention slice awareness is used for UEs residing in RRC_IDLE and/or RRC_INACTIVE mode of operation while performing the cell (re)selection procedure.

According to a second aspect of the present invention, this awareness is ideally complemented with knowledge about the cell's downlink signal strength and/or the cell's spatial coverage characteristics (e.g., small cell vs. macro cell, or beam directivity).

According to a third aspect of the present invention, the cell (re)selection parameters for UEs are configured in such a way that slice selection information overrules the legacy cell (re)selection criteria based on, for example, downlink signal strength or cell priorities.

According to a fourth aspect of the present invention, slice awareness is gained for use by UEs residing in RRC_IDLE and/or RRC_INACTIVE mode of operation for example in the course of their cell (re)selection activities. In detail, UEs shall be enabled to:
collect information about the list(s) of "allowed slices" broadcast by one or more base station(s) at a given location,
detect slice misalignments (between a UE's list of "configured slices" and a base station's list of "allowed slices") that may occur upon connection set-up or connection resume attempts, and/or
report the collected information pertaining to slice configurations to the infrastructure side.

According to a fifth aspect of the present invention, at least one step of the following procedural steps is performed as part of the MDT feature:
configuring a UE for slice specific collection of data,
logging (inside a UE) of slice specific data, and
reporting of slice specific data from the UE to the infrastructure side.

According to a sixth aspect of the present invention, the infrastructure side of a cellular communication system receives slice configuration reports and uses said reports to configure
UEs with adapted lists of "configured slices", and/or
base stations with adapted lists of "allowed slices".

According to a seventh aspect of the present invention, the infrastructure side of a cellular communication system receives slice configuration reports and uses said reports to select one set from a multitude of preconfigured sets of "configured slices" that are stored in the UE, and/or "allowed slices" that are stored in the base station.

According to an eighth aspect of the present invention, the infrastructure side additionally may use location stamps provided by the UEs, knowledge about the cell's downlink signal strength, the various cells' territorial coverage characteristics, knowledge about spatial directivity (in case of beam forming), knowledge about type of layer (e.g., small cell layer vs. macro cell layer) when the configuration data for UEs is compiled.

According to a ninth aspect of the present invention, a "slice misalignment detection" capability is introduced into the list of UE radio access capability parameters defined in 3GPP TS 38.306.

In a further embodiment of the present invention and in relation to beam forming (e.g., in 5G-NR frequency bands above 6 GHz) the configuration parameters are not only location dependent, but also direction dependent. Likewise, the configuration parameters may not only be location specific, but also direction specific.

In a further aspect, the invention provides a method to detect and report misalignments between lists of "configured slices" and lists of "allowed slices" in a radio communication system where RAN Slicing is supported to bring slice awareness to mobile communication devices.

For UEs residing in RRC_IDLE or RRC_INACTIVE mode of operation slice awareness can improve the UE's cell selection and cell reselection behaviour. With our concept the need for unnecessary (subsequent) cell (re)selection procedures can be reduced, which saves both radio resources on the air interface and processing resources on infrastructure side. In some scenarios it makes state transition from RRC_lDLE or RRC_INACTIVE to RRC_CONNECTED faster. At the same time, the overall system performance is improved which increases user experience.

Preferred embodiments of the invention will now be described, by way of example only, with reference to the accompanying drawings in which:
Fig. 1 shows a schematic cellular communication system;
Fig. 2 shows a user plane protocol stack;
Fig. 3 shows a control plane protocol stack;
Fig. 4 illustrates RRC states and state transitions between 4G-LTE and 5G-NR;
Fig. 5 shows a UE capability transfer procedure;
Fig. 6 illustrates an exemplary scenario for a selection of a sub-set of available slices;
Fig. 7 illustrates an exemplary scenario for a slice selection in a heterogenous network environment; and
Fig. 8 illustrates a possible mechanism for configuring a base station and/or a UE with an adapted list of slice identifiers.

In the following embodiments, to aid describing the invention we assume that the procedural steps are performed as part of the MDT feature. This invention is by no means restricted to using MDT as a vehicle to realize the inventive concept. The procedural steps comprise:
configuring a UE for slice specific collection of data,
logging (inside a UE) of slice specific data, and
reporting of slice specific data from the UE to the infrastructure side.

### i) Configuring a UE for Slice Specific Collection of Data

According to 3GPP TS 38.331 the *LoggedMeasurementConfiguration* RRC message is used to configure a UE for logging of measurement results when it is residing in RRC_IDLE or RRC_INACTIVE mode of operation. This message is transferred over the air interface on SRB1 in downlink direction from the network to the UE while the UE is residing in RRC_CONNECTED.

For configuring a UE to perform detection and reporting of slice alignments according to the teachings of this invention it is proposed to define a new information element *SliceMisalignmentDetection* as a Boolean parameter as shown below for inclusion in the *LoggedMeasurementConfiguration-r16-lEs* information element which is part of the *LoggedMeasurementConfiguration* RRC message. If set to "true" the network is requesting the UE to perform the detection and reporting method of the invention.

Example of new information element *SliceMisalignmentDetection,* configuring the UE for detection and reporting of slice misalignments:

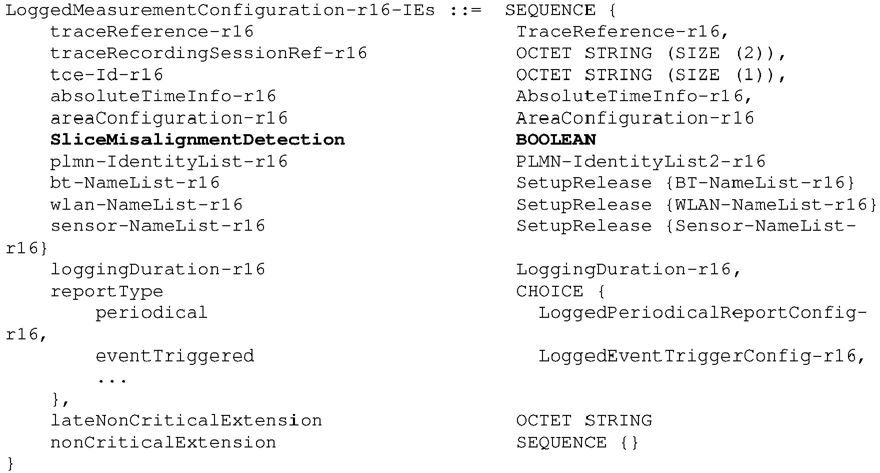

Optionally, and not shown above for the sake of brevity, this procedural step could be enhanced to support two separate activation steps: for control of detection and reporting of time and location of slice misalignment events observed upon cell (re)selection attempts, the information element *SliceMisalignmentDetection* is used. A further new information element *DetailedSlicelnformation* could be used to control collection and reporting of Slice-IDs. If only *SliceMisalignmentDetection* is set to "true" and *DetailedSlicelnformation* is not, then only time and location are logged when a slice misalignment event is observed. If only *DetailedSlicelnformation* is set to "true" and *SliceMisalignmentDetection* is not, then only the Slice-IDs are logged when a slice misalignment event is observed. If both *DetailedSlicelnformation* and *SliceMisalignmentDetection* are set to "true", then the UE is obliged to log time and location plus slice-IDs, when a slice misalignment event is observed.

### ii) Logging (inside a UE) of Slice Specific Data

Logging inside the UE is enhanced to cover "slice misalignment events", i.e. events where a UE tries to transition from RRC_IDLE or RRC_INACTIVE to RRC_CONNECTED by initiating the RRC connection set-up procedure or RRC connection resume procedure, wherein the outcome is not successful due to a discrepancy between the requested slice (e.g., taken from the list of "configured slices") and slices offered by the base station (e.g., taken from the list of "allowed" slices").

Information written into the log file for reporting at a later point in time may for instance comprise:
time (when did the detection of slice misalignment occur?),
location (where did the detection of slice misalignment occur?),
Slice-IDs and downlink signal strength measurements of the cell chosen by the UE for cell (re)selection, and
Slice-IDs and downlink signal strength measurements of neighbouring cells.

### iii) Reporting of Slice Specific Data

According to 3GPP TS 38.331 the log files created by the UE while residing in RRC_IDLE or RRC_INACTIVE mode of operation are later transmitted in uplink direction from the UE to the infrastructure side (e.g., based on network request) in a *UEInformationResponse* RRC message. It is sent over the air interface on SRB2 after the UE has returned to RRC_CONNECTED state.

For reporting of detected slice misalignments some new information elements are defined, such as the information elements *SliceMisalignmentReport*, *Slice*, and *SliceID* as shown below for inclusion in the RRC message *UEInformationResponse.*

Examples of new information elements *SliceMisalignmentReport, Slice* and *SliceID,* for reporting of slice misalignments to the infrastructure:

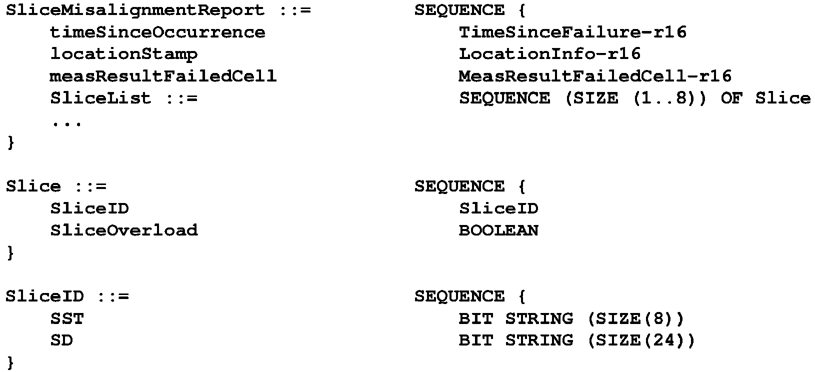

The new information element *SliceMisalignmentReport* enables an indication of a time stamp (when did the detection of slice misalignment occur?) and a location stamp (where did the detection of slice misalignment occur?). Here, the time stamp is relative to an absolute time provided by the infrastructure side It also allows transmission of a new information element called *SliceList* with an indication of up to eight single slice IDs (in form of the NSSAI / S-NSSAI structure), wherein each S-NSSAI (here: called *SliceID*) may contain
a mandatory SST (slice/service type) field, which identifies the slice type and consists of 8 bits (offering a value range from 0 to 255), and
an optional SD (slice differentiator) field, which differentiates among slices with same SST field and consist of 24 bits.

This information element allows indication of the slice(s) requested by the UE that caused the RRC connection establishment or resume procedure to fail due to slice misalignment. Additionally, the UE may set the information element *SliceOverload* to "true" (this can be done per *Slice*), if it is able to detect a (temporary) slice overload situation, e.g. from comparing a requested slice taken from the list of "configured slices" with the cell's "allowed slices", when its RRC connection set-up or RRC connection resume attempt is rejected, although the slice identifiers match.

Furthermore, the new information element *SliceMisalignmentReport* allows an addition of legacy measurement results performed on the cell that was chosen by the UE for cell (re)selection (i.e. measurements pertaining to the strength of the received downlink signal); this is achieved by adding the information element *measResultFailedCell.*

Optionally, and not shown above for the sake of brevity, the information elements *MeasResultList2NR-r16* or *MeasResultListNR* for neighbour cells could also be included in the *SliceMisalignmentReport* container, and it seems advantageous to add the new information element *SliceList* there as well for each of the up to *"maxFreq"* potentially relevant frequencies, or up to *"maxCellReport"* potentially relevant neighbour cells. This would allow indication of the "allowed slices" and the measured downlink signal strengths of neighbouring cells (i.e. possible alternative cells that other UEs could select when they are in similar situations).

On the infrastructure side, the base station may receive over the air interface an *UEInformationResponse* RRC message containing the *SliceMisalignmentReport* container. If configured the base station may generally combine MDT measurements received from a UE with further MDT measurements collected by the base station itself (e.g., on uplink signals received from the UE) for the same UE. After that, the base station uses trace-based MDT reporting mechanisms to convey the (combined) MDT reports back to a trace collection entity (TCE) of the core network, which takes on the role of an "MDT Server".

The trace feature is defined in 3GPP TS 32.421 and 3GPP TS 32.422. Besides the special MDT task described above, the trace feature has the following general use in the whole network. With the trace feature the cellular communication network is enabled to obtain a copy of all signalling messages belonging to a specific subscriber that are exchanged between certain core network entities or network functions. The collection of this information from various network entities or network functions can be configured by an element manager (EM).

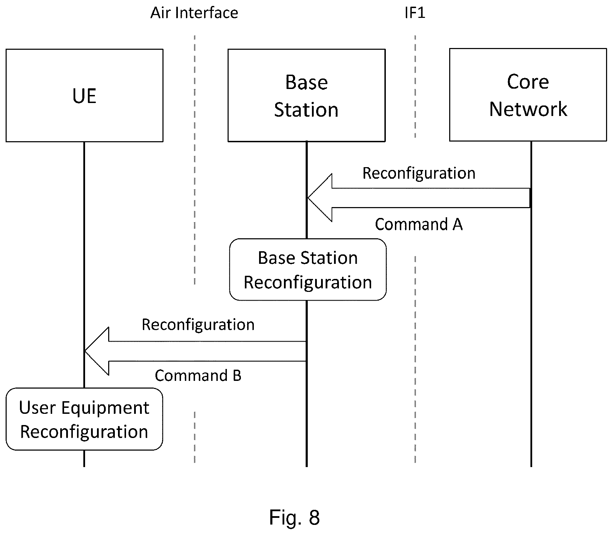

If appropriate, the infrastructure side can react with a variety of reconfiguration options on a reported slice misalignment event (cf. Fig. 8). For example, it may choose (according to aspect six of the present invention) at least one of the following options:
configure a UE with at least one set of (adapted) "configured slices",
configure a base station with at least one set of (adapted) "allowed slices".

For example, it may choose (according to aspect seven of the present invention referred to above) at least one of the following options:
transmit a reconfiguration command to a UE, instructing the UE to switch between at least two stored sets of "configured slices",
transmit a reconfiguration command to a base station, instructing the base station to switch between at least two stored sets of "allowed slices".

The UE to be configured or reconfigured does not need to be the reporting UE in all cases. In some cases, it makes sense to (re)configure other UEs that are in similar locations/situation or are having the same/similar trajectories (as the reporting UE).

Fig. 8 shows an exemplary message flow for all possible configuration options. The base station can be configured with at least one set of (adapted) "allowed slices" or instructed to switch between at least two sets of stored "allowed slices" with the *Reconfiguration Command A* message sent over the IF Interface. Likewise, the UE can be configured with at least one set of (adapted) "configured slices" or be instructed to switch between at least two sets of stored "configured slices" with the *Reconfiguration Command B* message sent over the Air Interface.

As far as the UE configuration or reconfiguration over the Air Interface is concerned, the *RRC Reconfiguration* message can be used (as *Reconfiguration Command B* message), because it is able to transport dedicated NAS Layer information from the network to a UE.

In a further embodiment of the present invention and in relation to UE capabilities, the detection and reporting feature is optional for a UE to support. Thus, an enhancement of the "UE radio access capability" procedures and information elements according to 3GPP TS 38.306 falls also into the scope of the present invention (cf. aspect nine of the present invention).

A "slice misalignment detection" capability may be included into the list of UE radio access capability parameters defined in 3GPP TS 38.306. The encoding of these parameters should be according to 3GPP TS 38.331, so that the UE radio access parameters for slice handling can be exchanged at RRC protocol layer in course of the "UE capability transfer" procedure that is shown in Fig. 5.

The names of the messages, events, and information elements (lEs) shall be understood to merely serve as examples. There are many other options to get the information across the respective interfaces. This invention is by no means restricted to the naming, encoding examples, and message flows we disclose here.

Furthermore, the various lEs to be used in the various messages may be assorted in one way or another, for example they may be collated in a new or already existing hierarchical structure, or grouped together with other lEs, for instance in form of a list or a container.

## Claims

1. A method for enabling a user equipment, UE, device to obtain information for assisting cell selection and/or cell reselection in a mobile communication network in which the mobile communication network is sub-divided into virtual networks termed network slices, each slice having an identifier unique within the mobile communications network, the identifier comprising an expected network behaviour indicator and a slice differentiator, the method comprising:
enabling the UE device to collect slice specific information when the UE device is in a radio resource control idle or inactive state.

2. The method according to claim 1, wherein the slice-specific information includes at least the identifier of a detected slice and optionally one or more of a signal strength measurement and a beam type of the detected slice.

3. The method according to claim 1 or claim 2, further comprising reporting to a network infrastructure entity the slice specific information collected by the UE device.

4. The method according to one of claim 1 to 3, wherein the slice specific information is collected for one or more cells of the mobile communication network other than a cell which has been selected by the UE device for camping on.

5. The method according to any preceding claim, wherein the slice specific information is stored for subsequent use.

6. The method according to any preceding claim, wherein the collected slice-specific information is reported to the mobile communication network.

7. The method according to claim 6, wherein the slice specific information is reported to the mobile communication network together with an indication of a difference between slices for which the UE device has been configured and slices available for a connection with the UE device.

8. The method according to any preceding claim, wherein the slice specific information is collected for use in performing cell selection or reselection for at least one of the UE device having reported the slice specific information and a further UE device identified as being in a similar situation to the reporting UE device, the further UE device having similar communication requirements or residing at a similar location to the reporting UE device.

9. The method according to claim 8, wherein at least one of the reporting UE and the further UE device is provisioned with configuration parameters such that slice selection or reselection information takes precedence over legacy cell selection or reselection criteria based on at least one of downlink signal strength and priorities.

10. The method according to any preceding claim, wherein the slice specific information is collected as part of a set of measurements performed in accordance with a procedure termed minimization of drive tests, MDT, in 3GPP standard 37.320.

11. The method according to one of claims 1 to 7, wherein the UE device is provisioned with configuration parameters such that slice selection or reselection information takes precedence over legacy cell selection or reselection criteria based on at least one of downlink signal strength and priorities.

12. A method for a mobile communication network to configure a user equipment, UE, device to collect data, wherein the mobile communication network is sub-divided into virtual networks termed network slices, each slice having an identifier unique within the mobile communications network, the identifier comprising an expected network behaviour indicator and a slice differentiator, the method comprising transmitting to the UE device an instruction to collect slice specific information when the UE device is in a radio resource control idle or inactive state.

13. The method according to claim 12, wherein the UE device is further instructed to report information concerning the collected slice specific information to the mobile communication network.

14. The method according to claim 13, wherein the mobile communication network uses the information reported by the UE device to determine whether there is a mismatch between network slices and a slice configuration of the UE device, in which case at least one of the UE device and a base station for connection with the UE device is reconfigured to overcome the mismatch.
